# EUROPÄISCHE PATENTSCHRIFT

(11) **EP 2 285 522 B1**
(45) Veröffentlichungstag und Bekanntmachung des Hinweises auf die Patenterteilung: **25.12.2013**
(21) Anmeldenummer: 09741860.2
(22) Anmeldetag: 05.05.2009
(51) Int. Cl.: B23K 26/06, B23K 26/067, B23K 26/08, B23K 26/10

(54) **LASERBEARBEITUNGSMASCHINE MIT ERWEITERTEM ARBEITSRAUM**
LASER MACHINING TOOL HAVING EXPANDED WORK SPACE
MACHINE D'USINAGE AU LASER AVEC ESPACE DE TRAVAIL ÉTENDU

(30) Priorität: 08.05.2008 DE 102008022449
(43) Veröffentlichungstag der Anmeldung: 23.02.2011
(73) Patentinhaber: TRUMPF Werkzeugmaschinen GmbH + Co. KG, 71254 Ditzingen (DE)
(72) Erfinder: KETTNER-REICH, Andreas, 70469 Stuttgart (DE)
(74) Vertreter: Kohler Schmid Möbus
(86) Internationale Anmeldenummer: PCT/EP2009/003206
(87) Internationale Veröffentlichungsnummer: WO 2009/135641

(56) Entgegenhaltungen:
- DE-A1- 19 620 391
- DE-A1-102006 021 622
- JP-A- 1 154 891
- JP-A- 2 133 187
- JP-U- 6 000 581
- US-A1- 2002 093 747

## Beschreibung

Die Erfindung betrifft eine Laserbearbeitungsmaschine gemäß dem Oberbegriff des Anspruchs 1 (siehe, z.B., JP 02/133187 A).

Es sind Laserbearbeitungsmaschinen, beispielsweise aus der JP 03-138092 A bekannt, bei denen ein Werkstück, das zu bearbeiten ist, auf eine Werkstückauflage aufgelegt wird. Oberhalb der Werkstückauflage kann ein Portal in Längsrichtung des Werkstücks verfahren werden. An dem Portal kann auf einer Seite ein Laserbearbeitungskopf angeordnet sein, der durch die Bewegung des Portals relativ zum Werkstück bewegbar ist. Mit Hilfe des Laserbearbeitungskopfs kann ein Werkstück bearbeitet werden. Mit der bekannten Ausgestaltung einer Laserbearbeitungsmaschine sind nur Werkstücke zu bearbeiten, die wesentlich kleiner sind als die Grundfläche der Laserbearbeitungsmaschine. Durch die Breite des Portals entsteht ein Bereich, der für ein Werkzeug nicht zugänglich ist und somit nicht bearbeitet werden kann.

Aus der DE 196 20 391 A1 ist eine Vorrichtung zum Bearbeiten von flachen Gegenständen, die aus einem nichtmetallischen Trägermaterial, wie z. B. Papier, Karton, Kunststoff oder dgl. bestehen, mit einer Bearbeitungsebene, in der ein zu bearbeitender Gegenstand angeordnet ist, mit einem Arm, der die Bearbeitungsebene übergreift und der über die gesamte Bearbeitungsebene in einer Richtung verschiebbar geführt ist, und mit einem Bearbeitungskopf zum Bearbeiten des Gegenstandes bekannt, wobei der Bearbeitungskopf an den Arm rechtwinklig zu dessen Bewegungsrichtung verschiebbar geführt ist. Insbesondere können mehrere Bearbeitungsköpfe an dem Arm vorgesehen sein. Die Bearbeitungsköpfe können zum Zeichnen, Schneiden oder Rillen des nichtmetallischen Trägermaterials ausgebildet sein.

Aus der DE 36 04 470 A1 ist eine Materialbearbeitungsstation mit einer Bearbeitungseinheit bekannt, die längs dreier senkrecht zueinander stehender Achsen positionierbar ist. Ein Ständer ist hierzu in der Regel senkrecht angeordnet und mit horizontal verlaufenden Spindelantrieben für einen Schlitten versehen, der seinerseits wiederum mit Spindelantrieben ausgerüstet ist und senkrecht zum Boden verschiebbar ist. Dieser Schlitten nimmt die Bearbeitungseinheit auf, die ihrerseits senkrecht zur Ebene des Ständers verschiebbar ist.

Aus der WO 2005/099979 A1 ist eine Vorrichtung bekannt, bei der zwei Laserstrahlbearbeitungsköpfe an einem gemeinsamen Schlitten angeordnet sind.

Die DE 203 06 581 U1 offenbart eine Laserschweißanordnung zum Schweißen von Bauteilen von Fahrzeugkarosserien, bestehend aus mehreren als Remote-Laser ausgebildeten und mit Distanz zum Bauteil angeordneten Laserschweißköpfen.

Aus der DE 100 06 516 A1 ist ein Verfahren zum Bearbeiten von Werkstücken mittels mehrerer Laserstrahlen bekannt, wobei mehrere Laserstrahlen über einen Strahlvereiniger zusammengeführt und über eine gemeinsame Strahlführung auf ein Werkstück geleitet werden.

Die DE 10 2005 025 506 A1 offenbart eine Laserbearbeitungsmaschine, die dazu eingerichtet ist, ein auf einem Bearbeitungstisch befestigtes blechförmiges Werkstück durch relatives Bewegen des Bearbeitungstisches und von Laserkollimations- und Positionierungsmitteln zu bearbeiten und durch wiederholtes Bewegen des blechförmigen Werkstückes in Längsrichtung ein nächstes zu bearbeitendes Gebiet auf dem Bearbeitungstisch zu fixieren, wenn die Bearbeitung eines zu bearbeitenden Gebiets beendet ist.

Aus der JP 01154891 A ist eine Laserbearbeitungsmaschine mit einer Tragstruktur bekannt, wobei an der Tragstruktur auf gegenüberliegenden Seiten jeweils zwei Laserbearbeitungsköpfe vorgesehen sind.

Aus der JP 02133187 A ist es bekannt, mittels unterschiedlicher Spiegel und Strahlteiler einen Laserstrahl aufzuteilen.

Aus der US 2002/0093747 A1 ist es bekannt, zwei Laserstrahlen zunächst zu bündeln, dann umzulenken und anschließend wieder aufzuteilen.

Die DE 10 2006 021 622 A1 offenbart eine Vorrichtung zum Laserfügen mittels der Laser-Remote-Methode, wobei ein Laserstrahl mittels einer Strahlablenkoptik innerhalb eines vom Laserstrahl erreichbaren Arbeitsbereichs oder Arbeitsraums über einen zu fügenden Bereich geführt wird und dem zu fügenden Bereich ein Schutzgas zugeführt wird. Dabei ist vorgesehen, dass das Schutzgas einem Arbeitsbereich oder Arbeitsraum selektiv zugeführt wird.

Aus der JP 01154891 A ist es bekannt, mehrere Scheiben gleichzeitig auszuschneiden, indem ein Laserstrahl derselben Lichtquelle synchron mehreren Bearbeitungsköpfen zugeführt wird.

Aufgabe der vorliegenden Erfindung ist es, eine Laserbearbeitungsmaschine bereitzustellen, die einen größeren Arbeitsraum aufweist, so dass größere Werkstücke bearbeitet werden können oder der Platzbedarf für die Laserbearbeitungsmaschine reduziert wird.

Gelöst wird diese Aufgabe erfindungsgemäß durch eine Laserbearbeitungsmaschine mit den Merkmalen des Anspruchs 1. Die Arbeitsbereiche der sich gegenüberliegenden Laserbearbeitungsköpfe überlappen sich nun und ergänzen sich gegenseitig lückenlos. Dadurch können die Maschinengrundfläche und der Arbeitsbereich, der im Wesentlichen durch die Verfahrbarkeit eines Laserbearbeitungskopfs in X- und Y-Richtung definiert wird, nahezu in Überdeckung gebracht werden. Somit kann entweder der Arbeitsbereich vergrößert werden, so dass größere Werkstücke bearbeitet werden können, oder der Platzbedarf, insbesondere der Grundflächenbedarf der Laserbearbeitungsmaschine, kann reduziert werden. Der fertigungstechnische Vorteil liegt darin, dass wie bisher eine Maschine mit Laserbearbeitungsköpfen, nur auf einer Seite der Tragstruktur hergestellt werden kann und der Kunde sich sehr spät entscheiden kann, ob er auch auf der gegenüber liegenden Seite Laserbearbeitungsköpfe wünscht/benötigt.

Die Strahlweiche kann angesteuert werden und kann bewegbar angeordnet sein, so dass je nach Bedarf der Laserstrahl auf den einen oder anderen Laserbearbeitungskopf gelenkt werden kann.

Besondere Vorteile ergeben sich, wenn auf beiden Seiten der Tragstruktur zumindest zwei Laserbearbeitungsköpfe angeordnet sind. Durch diese Vervielfachung der Laserbearbeitungsköpfe kann der Arbeitsbereich besonders gut ausgenutzt werden. Die Grundfläche der Laserbearbeitungsmaschine ist im Wesentlichen identisch mit dem Arbeitsbereich der Laserbearbeitungsköpfe. Außerdem kann das Werkstück an mehreren Stellen gleichzeitig bearbeitet werden, so dass eine höhere Taktung durchgeführt werden kann.

Gemäß der Erfindung sind die Laserbearbeitungsköpfe entlang der Tragstruktur bewegbar sind. Dadurch sind nahezu alle Bereiche des Werkstücks durch die Laserbearbeitungsköpfe zugänglich. Es ist unter Umständen einfacher, die Laserbearbeitungsköpfe entlang der Tragstruktur zu bewegen als das Werkstück relativ zu der Tragstruktur zu bewegen, da dadurch eine höhere Masse bewegt werden müsste.

Gemäß einer Weiterbildung kann vorgesehen sein, dass die Laserbearbeitungsköpfe auf derselben Seite der Tragstruktur unabhängig voneinander oder gekoppelt bewegbar sind. Während der Bearbeitung des Werkstücks kann an geeigneter Stelle von dem einen Laserbearbeitungskopf auf den anderen Laserbearbeitungskopf umgeschaltet werden.

Die Umschaltung von einem Laserbearbeitungskopf auf einen anderen Laserbearbeitungskopf kann jedoch auch in einer anderen Achsrichtung erfolgen, nämlich von einem Laserbearbeitungskopf, der auf einer ersten Seite der Tragstruktur angeordnet ist, auf einen Laserbearbeitungskopf, der auf der gegenüberliegenden Seite der Tragstruktur angeordnet ist. Auf unterschiedlichen Seiten der Tragstruktur angeordnete Laserbearbeitungsköpfe können entweder gekoppelt oder unabhängig voneinander entlang der Tragstruktur verfahren werden.

Da gemäß der Erfindung zumindest ein Laserbearbeitungskopf eine zusätzliche Achse aufweist, kann lokal begrenzt eine hochdynamische Werkstückbearbeitung durchgeführt werden.

Gemäß einer Ausgestaltung der Erfindung kann vorgesehen sein, dass die Tragstruktur relativ zur Werkstückauflage bewegbar ist. Hierdurch erfolgt eine noch bessere Ausnutzung des Arbeitsraums.

Weitere Möglichkeiten bei der Werkstückbearbeitung ergeben sich, wenn mehrere Laserbearbeitungsköpfe an einem gemeinsamen Schlitten angeordnet sind. Somit können die Laserbearbeitungsköpfe über den gemeinsamen Schlitten gemeinsam relativ zur Tragstruktur bewegt werden.

Gemäß einer Weiterbildung kann vorgesehen sein, dass zumindest ein Laserbearbeitungskopf relativ zum Schlitten, insbesondere linear bewegbar ist. Somit kann die Relativposition des einen Laserbearbeitungskopfs zum anderen Laserbearbeitungskopf an demselben Schlitten verändert werden. Außerdem ist eine hochdynamische Werkstückbearbeitung möglich.

Außerdem kann vorgesehen sein, dass die Laserbearbeitungsköpfe unabhängig voneinander oder gekoppelt relativ zum Schlitten, insbesondere linear, bewegbar sind.

Wenn zumindest zwei Laserbearbeitungsköpfe vorgesehen sind, ergeben sich unterschiedliche Leistungsanpassungsmöglichkeiten, abhängig von den zu bearbeitenden Werkstücken.

Besonders vorteilhaft ist es, wenn zumindest zwei Strahlerzeuger vorgesehen sind. Insbesondere können so viele Strahlerzeuger vorgesehen sein, wie Laserbearbeitungsköpfe vorgesehen sind. Es kann eine feste Zuordnung der

Strahlerzeuger zu einem Laserbearbeitungskopf erfolgen. Durch geschicktes Schachteln gleichartiger Werkstücke können gleichzeitig zwei Werkstücke bearbeitet werden, indem man zwei Strahlerzeuger anbaut. Weiterhin ist es denkbar, dass die Leistung eines Strahlerzeugers an geeigneter Stelle geteilt wird und auf zwei Laserbearbeitungsköpfe gelenkt wird. Zu diesem Zweck ist es vorteilhaft, wenn ein Strahlteilungsmodul vorgesehen ist.

Für die besonders leistungsintensive Bearbeitung einzelner Werkstücke können die Strahlen zweier Strahlerzeuger zu einem Energiestrahl an geeigneter Stelle zusammengeführt werden. Zu diesem Zweck kann ein Strahlkoppler vorgesehen sein. Der Strahlkoppler kann wiederum mit einer Strahlweiche verbunden sein oder auch nur verfahrbar sein, so dass der Strahlkoppler auch als Weiche verwendet werden kann und unterschiedlichen Laserbearbeitungsköpfen den Energiestrahl zuführen kann.

Bei einer besonders vorteilhaften Ausgestaltung der Erfindung kann eine Trennwand vorgesehen sein, so dass auf der einen Seite der Trennwand eine Werkstückbearbeitung durchgeführt werden kann, während auf der anderen Seite der Trennwand ein Werkstück beladen oder entladen werden kann. Wenn die Trennwand entfernt wird, können auch größere Werkstücke bearbeitet werden.

Weitere Merkmale und Vorteile der Erfindung ergeben sich aus der nachfolgenden Beschreibung von Ausführungsbeispielen der Erfindung anhand der Figuren der Zeichnung, die erfindungswesentliche Einzelheiten zeigen, und aus den Ansprüchen. Die einzelnen Miarkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigen:
- Fig. 1: eine Draufsicht auf eine Laserbearbeitungsmaschine;
- Fig. 2: eine schematische Draufsicht auf eine Laserbearbeitungsmaschine mit vier Laserbearbeitungsköpfen;
- Fig. 3: eine Draufsicht auf eine Laserbearbeitungsmaschine mit mehreren an einem Schlitten angeordneten Laserbearbeitungsköpfen;
- Fig. 4a, 4b: eine Laserbearbeitungsmaschine mit einer Strahlweiche;
- Fig. 5: eine Laserbearbeitungsmaschine mit zwei Strahlerzeugern;
- Fig. 6a, 6b: eine Laserbearbeitungsmaschine mit einem Strahlkopplungsmodul;
- Fig. 7a - 7c: eine Laserbearbeitungsmaschine mit einem Strahlführungsmodul;
- Fig. 8: eine Laserbearbeitungsmaschine mit einer Trennwand;

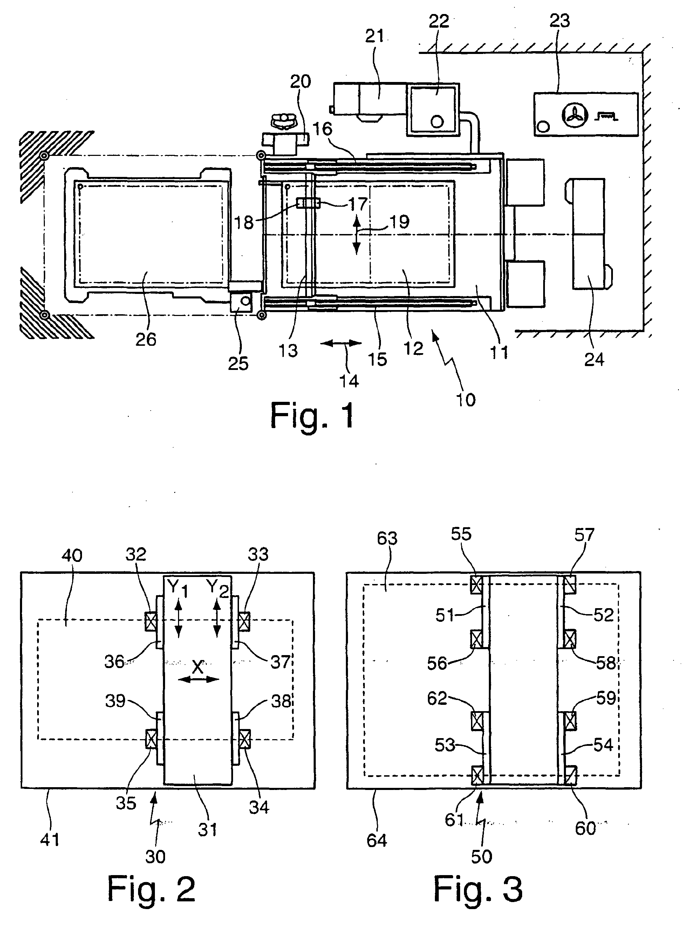

Figur 1 zeigt eine Laserbearbeitungsmaschine 10 mit einer Werkstückauflage 11, auf der ein Werkstück 12 angeordnet ist. Über dem Werkstück 12 ist eine Tragstruktur 13 in Form eines Portals angeordnet. Die Tragstruktur 13 ist in Doppelpfeilrichtung 14 entlang von Führungen 15, 16 bewegbar. Angetrieben wird die Tragstruktur 13 dabei durch Linearantriebe. Die die Bewegung in Doppelpfeilrichtung 14 bewirkende Anordnung wird als (Werkzeug-)Achse bezeichnet. An der Tragstruktur 13 sind beidseits Laserbearbeitungsköpfe 17, 18 angeordnet. Diese sind in Doppelpfeilrichtung 19 relativ zur Tragstruktur 13 bewegbar. Anordnungen, die eine Bewegung in Doppelpfeilrichtung 19 bewirken, werden ebenfalls als (Werkzeug-) Achse bezeichnet. Dadurch, dass Laserbearbeitungsköpfe 17, 18 auf beiden Seiten der Tragstruktur angeordnet sind, wird ein maximaler Arbeitsbereich erreicht. Insbesondere könnte ein Werkstück bearbeitet werden, das im Wesentlichen die Länge der Führungen 15, 16 aufweist und dessen Breite nahezu dem Abstand der Führungen 15, 16 entspricht.

Um die Laserbearbeitungsmaschine 10 herum sind noch zusätzliche Einrichtungen angeordnet, wie ein Bedienpult 20, ein Schaltschrank 21, eine Absaugung 22, ein Kühlaggregat 23, eine Leistungsversorgung 24, ein Hydraulikaggregat 25 sowie ein Plattenwechsler 26 zum Beladen und Entladen der Werkstücke.

Bei der Ausgestaltung einer Laserbearbeitungsmaschine 30 gemäß Figur 2 sind an der Tragstruktur 31 insgesamt vier Laserbearbeitungsköpfen 32 bis 35 vorgesehen, wobei jeweils zwei Laserbearbeitungsköpfe 32, 35 bzw. 33, 34 auf einer Seite der Tragstruktur 31 angeordnet sind. Die Laserbearbeitungsköpfe 32 bis 35 sind jeweils an einem Schlitten 36 bis 39 angeordnet. Die Schlitten 36 bis 39 sind in Doppelpfeilrichtungen Y1 bzw. Y2 und die gesamte Tragstruktur 31 in Doppelpfeilrichtung X bewegbar. Dies bedeutet, dass ein durch die Fläche 40 angedeuteter Arbeitsbereich bzw. Arbeitsraum durch die Laserbearbeitungsmaschine 30 bearbeitbar ist. Der Arbeitsbereich 40 entspricht nahezu der Grundfläche 41 der Laserbearbeitungsmaschine 30. Durch die Breite der Tragstruktur 31 entsteht kein der Breite der Tragstruktur 31 entsprechender Bereich, in dem keine Bearbeitung erfolgen kann.

Die Laserbearbeitungsköpfe 32 bis 35 sitzen gemäß der Erfindung auf einer kleinen Zusatzachse, so dass eine hochdynamische Bewegung der Laserbearbeitungsköpfe 32 bis 35 relativ zu den Schlitten 36 bis 39 möglich ist.

Bei der Laserbearbeitungsmaschine 50 gemäß Figur 3 sind an jedem Schlitten 51 bis 54 jeweils zwei Laserbearbeitungsköpfe 55 bis 62 vorgesehen. Die Laserbearbeitungsköpfe 55 bis 62 sind, gemäß der Erfindung, an den Schlitten gekoppelt oder unabhängig voneinander bewegbar angeordnet. Der Arbeitsbereich ist durch die Bezugsziffer 63 gekennzeichnet und die Grundfläche der Laserbearbeitungsmaschine 50 mit der Bezugsziffer 64.

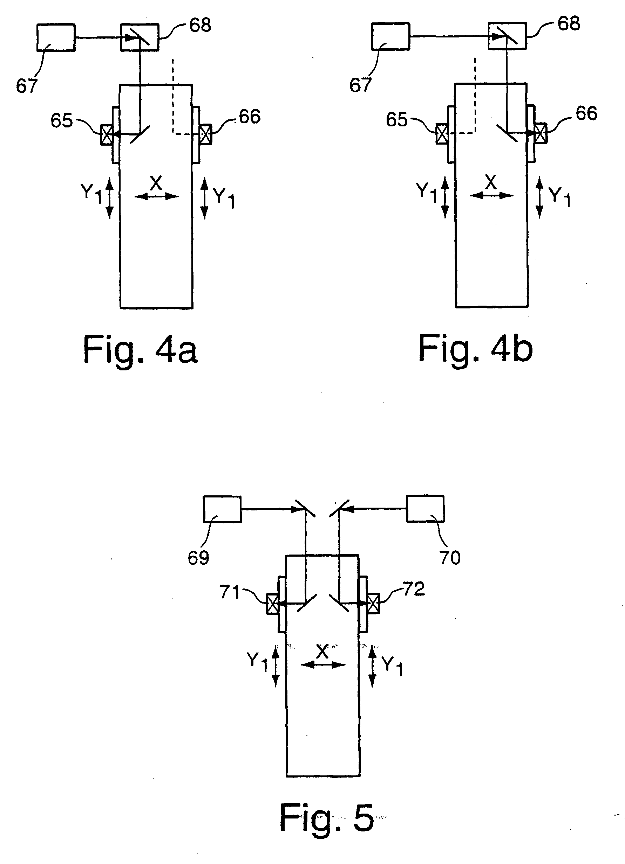

In den Figuren 4a, 4b ist schematisch die Leistungsumschaltung zwischen zwei Laserbearbeitungsköpfen 55, 66 dargestellt. In einem Strahlerzeuger 67 wird ein Strahl erzeugt und über eine Strahlweiche 68 dem Laserbearbeitungskopf 65 (Fig. 4a) oder dem Laserbearbeitungskopf 66 (Fig. 4b) zugeführt. Während der Bearbeitung eines Werkstückes kann somit an geeigneter Stelle von dem Laserbearbeitungskopf 65 auf den Laserbearbeitungskopf 66 umgeschaltet werden. Zu diesem Zweck kann die Strahlweiche 68 bewegbar angeordnet sein und durch eine Steuerung angesteuert werden.

Wie in der Figur 5 gezeigt ist, kann jedoch auch vorgesehen sein, dass mehrere Strahlerzeuger 69, 70 vorhanden sind, die jeweils mit einem zugeordneten Laserbearbeitungskopf 71, 72 zusammenwirken.

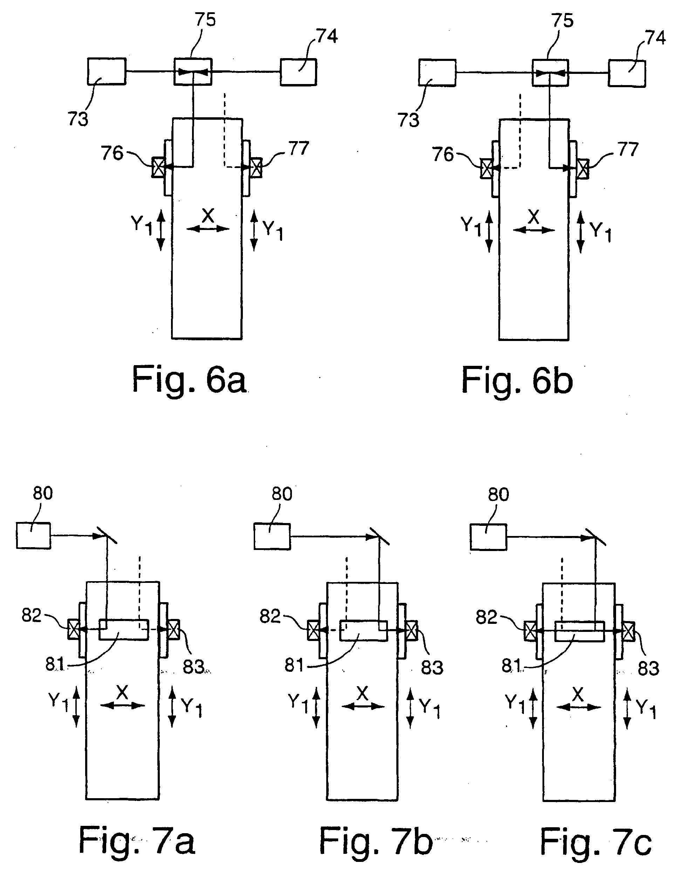

Wie sich aus den Figuren 6a, 6b ergibt, besteht bei der Verwendung mehrerer Strahlerzeuger 73, 74 jedoch auch eine weitere Möglichkeit der Leistungsanpassung. Die Strahlen der Strahlerzeuger 73, 74 können auf ein Strahlkopplungsmodul 75 geführt werden, wo die Laserleistung zumindest teilweise addiert wird und anschließend an einen der Laserbearbeitungsköpfe 76, 77 übergeben wird. Dabei kann das Strahlkopplungsmodul 75 bewegbar angeordnet sein, so dass wahlweise die Laserleistung an den Laserbearbeitungskopf 76 (Fig. 6a) oder 77 (Fig. 6b) übergeben werden kann. Durch das Strahlkopplungsmodul 75 kann gegebenenfalls auch nur ein Teil der gekoppelten Leistung an die Laserbearbeitungsköpfe 76, 77 übergeben werden.

Gemäß der in den Figuren 7a bis 7c gezeigten Ausgestaltung der Erfindung kann mittels eines Strahlerzeugers 80 Laserleistung erzeugt werden und über ein Strahlteilungsmodul 81 an einen ersten Laserbearbeitungskopf 82 oder einen zweiten Laserbearbeitungskopf 83 übergeben werden. In den Figuren 7a, 7b ist das Strahlteilungsmodul passiv. Dies bedeutet, dass die Laserleistung des Strahlerzeugers 80 entweder an den Laserbearbeitungskopf 82 (Fig. 7a) oder den Laserbearbeitungskopf 83 (Fig. 7b) übergeben wird. In der Figur 7c ist das Strahlteilungsmodul aktiv. Dies bedeutet, dass die Laserleistung des Strahlerzeugers 80 aufgeteilt wird und ein Teil der erzeugten Laserleistung an beide Laserbearbeitungsköpfe 82, 83 übergeben werden kann.

In den Figuren 4 bis 7 wurden unterschiedliche Strahlführungsmöglichkeiten aufgezeigt. Dies wurde beispielhaft anhand zweier sich an einer Tragstruktur gegenüberliegender Laserbearbeitungsköpfe dargestellt. Es versteht sich, dass diese Konzepte auch auf mehrere sich an einer Tragstruktur gegenüberliegende Laserbearbeitungsköpfe übertragbar sind. Außerdem ist es denkbar, die Strahlführungskonzepte auf zwei oder mehrere Laserbearbeitungsköpfe anzuwenden, die sich auf derselben Seite einer Tragstruktur befinden.

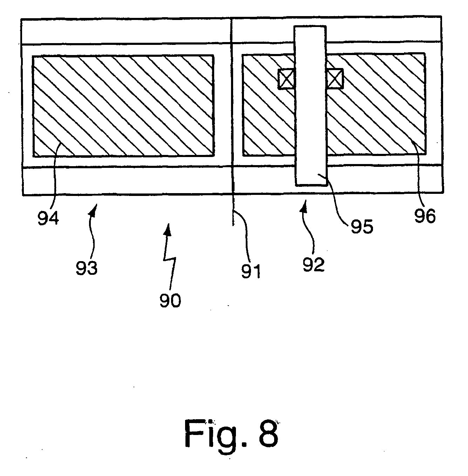

In der Figur 8 ist eine Ausgestaltung einer Laserbearbeitungsmaschine 90 gezeigt, die eine Trennwand 91 aufweist. Dadurch ist es bei Verwendung der Trennwand 91 möglich, auf der einen Seite 92 eine Werkstückbearbeitung durchzuführen und auf der anderen Seite 93 ein Werkstück 94 zu Beladen oder zu Entladen. Da die Tragstruktur mit dem Laserbearbeitungskopf von beiden Seiten dicht an die Trennwand heranfahren kann, entsteht auch in diesem Bearbeitungsmodus nahezu kein zusätzlicher Flächenbedarf. Wenn die Werkstückbearbeitung auf der rechten Seite 92 beendet ist, kann die Tragstruktur 95 auf die linke Seite 93 überführt werden, so dass dort eine Werkstückbearbeitung stattfinden kann, während das auf der rechten Seite 92 bearbeitete Werkstück 96 entnommen und ein neues Werkstück beladen werden kann. Es ist auch denkbar, die Trennwand 91 wegzulassen und ein Werkstück zu bearbeiten, welches sich auf beide Seiten 92, 93 erstreckt.

## Patentansprüche

1. Laserbearbeitungsmaschine (10, 30, 50, 90) mit einer Tragstruktur (13, 31, 95), an deren einer Seite zumindest ein Laserbearbeitungskopf (17, 18, 32-35, 55-62, 65, 66, 71, 82, 83) angeordnet ist, sowie einer Werkstückhalterung und/oder Werkstückauflage (11), wobei der Laserbearbeitungskopf (17, 18, 32-35, 55-62, 65, 66, 71, 82, 83) und die Werkstückhalterung und/oder Werkstückauflage (11) relativ zueinander bewegbar sind, wobei auf zwei gegenüber liegenden Seiten der Tragstruktur (13, 31, 95) zumindest ein Laserbearbeitungskopf (17, 18, 32-35, 55-62, 85, 66, 71, 72, 76, 77, 82, 83) angeordnet ist, wobei eine Strahlweiche (68) vorgesehen ist, durch die ein Laserstrahl eines Strahlerzeugers (67) zwischen Laserbearbeitungsköpfen (65, 66) umschaltbar ist, **dadurch gekennzeichnet, dass** die Laserbearbeitungsköpfe (17, 18, 32-35, 55-62, 65, 66, 71, 82, 83, 101-104) entlang der Tragstruktur (13, 31, 95, 105) jeweils durch einen Schlitten (36-39, 51-54) bewegbar sind und zumindest ein Laserbearbeitungskopf (17, 18, 32-35, 55-62, 65, 66, 71, 82 83) eine zusätzliche Achse aufweist so daß eine hochdynamische Bewegung der Laserbearbeitungsköpfe (17, 18, 32-35, 55-62, 65, 66, 71, 82, 83, 101-104) relativ zu den Schlitten (36-39, 51-54) möglich ist.

2. Laserbearbeitungsmaschine nach Anspruch 1, **dadurch gekennzeichnet, dass** auf beiden Seiten der Tragstruktur (13, 31, 95) zumindest zwei Laserbearbeitungsköpfe (17, 18, 32-35, 55-62, 65, 66, 71, 82, 83) angeordnet sind.

3. Laserbearbeitungsmaschine nach einem der vorhergehenden Ansprüche, **dadurch gekennzeichnet, dass** die Laserbearbeitungsköpfe (17, 18, 32-35, 55-62, 65, 66, 71, 82, 83) auf derselben Seite der Tragstruktur (13, 31, 95) unabhängig von einander oder gekoppelt bewegbar sind.

4. Laserbearbeitungsmaschlne nach einem der vorhergehenden Ansprüche, **dadurch gekennzeichnet, dass** die Tragstruktur (13, 31, 95) relativ zur Werkstückauflage (11) bewegbar ist.

5. Laserbearbeitungsmaschine nach einem der vorhergehenden Ansprüche, **dadurch gekennzeichnet, dass** mehrere Laserbearbeitungsköpfe (55-62) an einem gemeinsamen Schlitten (51-54) angeordnet sind.

6. Laserbearbeitungsmaschine nach Anspruch 5, **dadurch gekennzeichnet, dass** zumindest ein Laserbearbeitungskopf (55-62) relativ zum Schlitten (51-54), insbesondere linear, bewegbar ist.

7. Laserbearbeitungsmaschine nach Anspruch 5 oder 6, **dadurch gekennzeichnet, dass** die Laserbearbeitungsköpfe (55-62) unabhängig von einander oder gekoppelt relativ zum Schlitten (51-54), insbesondere linear, beweglich sind.

8. Laserbearbeitungsmaschine nach einem der vorhergehenden Ansprüche, **dadurch gekennzeichnet, dass** zumindest zwei Strahlerzeuger (69, 70, 73, 74) vorgesehen sind.

9. Laserbearbeitungsmaschine nach Anspruch 8, **dadurch gekennzeichnet, dass** ein Strahlkoppler (75) vorgesehen ist, der die Laserstrahlen zweier Strahlerzeuger (73, 74) koppelt und einem Laserbearbeitungskopf zuführt.

10. Laserbearbeitungsmaschine nach einem der vorhergehenden Ansprüche, **dadurch gekennzeichnet, dass** ein Strahlteilungsmodul (81) vorgesehen ist.

11. Laserbearbeitungsmaschine nach einem der vorhergehenden Ansprüche, **dadurch gekennzeichnet, dass** eine Trennwand (91) vorgesehen ist.

## Claims

1. Laser processing machine (10, 30, 50, 90) having a carrier structure (13, 31, 95), at one side of which at least one laser processing head (17, 18, 32-35, 55-62, 65, 66, 71, 82, 83) is arranged, and a workpiece retention member and/or workpiece support (11), the laser processing head (17, 18, 32-35, 55-62, 65, 66, 71, 82, 83) and the workpiece retention member and/or workpiece support (11) being able to be moved relative to each other, wherein at least one laser processing head (17, 18, 32-35, 55-62, 65, 66, 71, 72, 76, 77, 82, 83) is arranged at two opposite sides of the carrier structure (13, 31, 95), there being provided a beam deflector (68) by means of which a laser beam of a beam generator (67) can be switched between laser processing heads (65, 66), **characterized in that** the laser processing heads (17, 18, 32-35, 55-62, 65, 66, 71, 82, 83, 101-104) can be moved along the carrier structure (13, 31, 95, 105) by means of one respective sliding member (36-39, 51-54) and at least one laser processing head (17, 18, 32-35, 55-62, 65, 66, 71, 82, 83) has an additional axis to allow a highly dynamic movement of the laser processing heads (17, 18, 32-35, 55-62, 65, 66, 71, 82, 83, 101-104) relative to the sliding members (36-39, 51-54).

2. Laser processing machine according to claim 1, **characterized in that** at least two laser processing heads (17, 18, 32-35, 55-62, 65, 66, 71, 82, 83) are arranged at each of the two sides of the carrier structure (13, 31, 95).

3. Laser processing machine according to any one of the preceding claims, **characterised in that** the laser processing heads (17, 18, 32-35, 55-62, 65, 66, 71, 82, 83) at the same side of the carrier structure (13, 31, 95) can be moved independently of each other or in a coupled state.

4. Laser processing machine according to any one of the preceding claims, **characterised in that** the carrier structure (13, 31, 95) can be moved relative to the workpiece support (11).

5. Laser processing machine according to any one of the preceding claims, **characterised in that** a plurality of laser processing heads (55-62) are arranged on a common sliding member (51-54).

6. Laser processing machine according to claim 5, **characterised in that** at least one laser processing head (55-62) can be moved relative to the sliding member (51-54), in particular in a linear manner.

7. Laser processing machine according to claim 5 or claim 6, **characterised in that** the laser processing heads (55-62) can be moved relative to the sliding member (51-54) independently of each other or in a coupled state, in particular in a linear manner.

8. Laser processing machine according to any one of the preceding claims, **characterised in that** at least two beam generators (69, 70, 73, 74) are provided.

9. Laser processing machine according to claim 8, **characterised in that** there is provided a beam coupler (75) which couples the laser beams of two beam generators (73, 74) and supplies them to a laser processing head.

10. Laser processing machine according to any one of the preceding claims, **characterised in that** a beam splitter module (81) is provided.

11. Laser processing machine according to any one of the preceding claims, **characterised in that** a partition wall (91) is provided.

## Revendications

1. Machine d'usinage au laser (10, 30, 50, 90) dotée d'une structure porteuse (13, 31, 95), sur un côté de laquelle est disposée au moins une tête d'usinage au laser (17, 18, 32-35, 55-62, 65, 66, 71, 82, 83), ainsi que d'un porte-pièce et/ou support de pièce (11), la tête d'usinage au laser (17, 18, 32-35, 55-62, 65, 66, 71, 82, 83) et le porte-pièce et/ou support de pièce (11) étant mobiles l'un par rapport à l'autre, au moins une tête d'usinage au laser (17, 18, 32-35, 55-62, 65, 66, 71, 72, 76, 77, 82, 83) étant disposée sur deux côtés de la structure porteuse (13, 31, 95) opposés l'un à l'autre, un commutateur de faisceau (68) étant prévu, au moyen duquel un faisceau laser d'un générateur de faisceau (67) peut être commuté entre les têtes d'usinage au laser (65, 66); **caractérisée en ce que** les têtes d'usinage au laser (17, 18, 32-35, 55-62, 65, 66, 71, 82, 83, 101-104) sont mobiles le long de la structure porteuse (13, 31, 95, 105) chaque fois au moyen d'un chariot (36-39, 51-54) et au moins une tête d'usinage au laser (17, 18, 32-35, 55-62, 65, 66, 71, 82, 83) présente un axe supplémentaire, de sorte qu'un mouvement hautement dynamique des têtes d'usinage au laser (17, 18, 32-35, 55-62, 65, 66, 71, 82, 83, 101-104) par rapport aux chariots (36-39, 51-54) est possible.

2. Machine d'usinage au laser selon la revendication 1, **caractérisée en ce qu'**au moins deux têtes d'usinage au laser (17, 18, 32-35, 55-62, 65, 66, 71, 82, 83) sont disposées des deux côtés de la structure porteuse (13, 31, 95).

3. Machine d'usinage au laser selon une des revendications précédentes, **caractérisée en ce que** les têtes d'usinage au laser (17, 18, 32-35, 55-62, 65, 66, 71, 82, 83) sont mobiles indépendamment l'une de l'autre ou de manière couplée du même côté de la structure porteuse (13, 31, 95).

4. Machine d'usinage au laser selon une des revendications précédentes, **caractérisée en ce que** la structure porteuse (13, 31, 95) est mobile par rapport au support de pièce (11).

5. Machine d'usinage au laser selon une des revendications précédentes, **caractérisée en ce que** plusieurs têtes d'usinage au laser (55-62) sont disposées sur un chariot commun (51-54).

6. Machine d'usinage au laser selon la revendication 5, **caractérisée en ce qu'**au moins une tête d'usinage au laser (55-62) est mobile, en particulier linéairement, par rapport au chariot (51-54).

7. Machine d'usinage au laser selon la revendication 5 ou 6, **caractérisée en ce que** les têtes d'usinage au laser (55-62) sont mobiles, en particulier linéairement, indépendamment l'une de l'autre ou de manière couplée par rapport au chariot (51-54).

8. Machine d'usinage au laser selon une des revendications précédentes, **caractérisée en ce qu'**au moins deux générateurs de faisceau (69, 70, 73, 74) sont prévus.

9. Machine d'usinage au laser selon la revendication 8, **caractérisée en ce qu'**un coupleur de faisceaux (75) est prévu, qui couple les faisceaux laser de deux générateurs de faisceau (73, 74) et les amène à une tête d'usinage au laser.

10. Machine d'usinage au laser selon une des revendications précédentes, **caractérisée en ce qu'**un module de division de faisceau (81) est prévu.

11. Machine d'usinage au laser selon une des revendications précédentes, **caractérisée en ce qu'**une paroi de séparation (91) est prévue.
